# EUROPÄISCHE PATENTANMELDUNG

(11) **EP 4 675 840 A1**
(43) Veröffentlichungstag der Anmeldung: **07.01.2026**
(21) Anmeldenummer: 25186635.6
(22) Anmeldetag: 01.07.2025
(51) Int. Cl.: H01M 50/574, H01M 50/296, H01M 50/247, H01M 10/48, H01M 10/42

(54) **AKKUMULATOR FÜR ARBEITSGERÄTE**

(30) Priorität: 05.07.2024 DE 102024119228
(71) Anmelder: Einhell Germany AG, 94405 Landau / Isar (DE)
(72) Erfinder: Palha, Rui, 200233 Shanghai (CN)
(74) Vertreter: Canzler & Bergmeier Patentanwälte Partnerschaft mbB

(57) **Zusammenfassung**

Die Erfindung betrifft einen Akkumulator (1), insbesondere Arbeitsgeräteackumulator, für Arbeitsgeräte mit einem Gehäuse (2), das einen Innenraum (3) umgibt, mit zumindest einer im Innenraum (3) angeordneten Energiespeichereinheit (4), mit zumindest zwei Kontaktelementen (7) und mit einer Steuereinheit (15) zum Steuern des Akkumulators (1). Die Steuereinheit (15) ist derart ausgebildet und/oder eingerichtet, dass diese zumindest ein Kontaktelement (7) für einen und/oder während eines Transport- und/oder Lagerzustands des Akkumulators (1) spannungslos schalten kann. Außerdem betrifft die Erfindung ein Verfahren zum Betreiben und/oder zum Versetzen eines Akkumulators (1) in einen Transport- und/oder Lagerzustand.

## Beschreibung

Die vorliegende Erfindung betrifft einen Akkumulator, insbesondere Arbeitsgeräteakkumulator, für Arbeitsgeräte mit einem Gehäuse, das einen Innenraum umgibt, mit zumindest einer im Innenraum angeordneten Energiespeichereinheit, mit zumindest zwei Kontaktelementen und mit einer Steuereinheit zum Steuern des Akkumulators.

Aus der EP 3 855 555 B1 ist ein Akkumulator bekannt.

Aufgabe der vorliegenden Erfindung ist es, einen sichereren und/oder langlebigeren Akku zu schaffen.

Die Aufgabe wird gelöst durch einen Akkumulator und/oder ein Verfahren zum Betreiben und/oder zum Versetzen eines Akkumulators mit den Merkmalen der unabhängigen Ansprüche. Vorteilhafte oder bevorzugte Ausführungen sind jeweils Gegenstand eines korrespondierenden abhängigen Anspruchs.

Vorgeschlagen wird ein Akkumulator, insbesondere Arbeitsgeräteakkumulator, für Arbeitsgeräte mit einem Gehäuse, das einen Innenraum umgibt. Der Innenraum schützt die internen Komponenten vor äußeren Einflüssen wie Staub, Feuchtigkeit und mechanischen Beschädigungen. Vorgeschlagen wird eine im Innenraum angeordnete Energiespeichereinheit sowie zwei Kontaktelemente und eine Steuereinheit zum Steuern des Akkumulators. Die Energiespeichereinheit ermöglicht die Speicherung und Bereitstellung von Energie für das Arbeitsgerät, wodurch ein kontinuierlicher Betrieb gewährleistet wird. Die Kontaktelemente gewährleisten eine zuverlässige elektrische Verbindung, was die Effizienz und Sicherheit des Akkumulators erhöht. Die Steuereinheit übernimmt die Kontrolle und Regelung des Akkumulators, was die Funktionalität und Zuverlässigkeit verbessert.

Vorteilhaft ist es, wenn die Steuereinheit derart ausgebildet und/oder eingerichtet ist, dass diese zumindest ein Kontaktelement für einen und/oder während eines Transport- und/oder Lagerzustands des Akkumulators spannungslos schalten kann. Dies erhöht die Sicherheit, indem es verhindert, dass der Akkumulator während des Transports oder der Lagerung ungewollt Energie abgibt. Dadurch werden mögliche Gefahren, wie Kurzschlüsse oder Überhitzungen, vermieden. Zudem wird die Lebensdauer des Akkumulators verlängert, da ungewollte Entladungen vermieden werden.

Des Weiteren ist es von Vorteil, wenn die Steuereinheit derart ausgebildet und/oder eingerichtet ist, dass diese das zumindest eine vorher spannungslose Kontaktelement unter Spannung schalten kann. Dies ermöglicht die einfache Wiederinbetriebnahme des Akkumulators, sobald der Transport- oder Lagerzustand beendet wird. Dadurch wird die Betriebsbereitschaft des Akkumulators sichergestellt, was die Effizienz und Produktivität des Arbeitsgeräts erhöht.

Vorteilhafterweise umfasst der Akkumulator zumindest ein Betätigungselement, mittels dem der Transport- und/oder Lagerzustand aktiviert werden kann, so dass das zumindest eine vorher spannungslose Kontaktelement unter Spannung geschaltet wird. Das Betätigungselement erlaubt eine benutzerfreundliche Aktivierung des Betriebszustands. Dies führt zu einer verbesserten Handhabung und reduziert das Risiko von Bedienfehlern.

Gemäß einer vorteilhaften Weiterbildung der Erfindung ist die Steuereinheit derart ausgebildet und/oder eingerichtet, dass diese während des Transport- und/oder Lagerzustands des Akkumulators das zumindest eine Betätigungselement überwachen kann, um das Betätigen des Betätigungselements zum Beenden des Transport- und/oder Lagerzustands zu erkennen. Dies erhöht die Sicherheit, indem sichergestellt wird, dass der Akkumulator nur dann aktiviert wird, wenn dies beabsichtigt ist. Dadurch wird ein ungewollter

Energiefluss vermieden, was die Lebensdauer und Zuverlässigkeit des Akkumulators erhöht.

Es ist vorteilhaft, wenn mittels des zumindest einen Betätigungselements der Transport- und/oder Lagerzustand aktiviert werden kann, sodass das zumindest eine Kontaktelement spannungslos geschalten wird. Dies bietet eine einfache Möglichkeit, den Akkumulator in einen sicheren Zustand zu versetzen. Dadurch wird die Sicherheit während des Transports und der Lagerung erhöht, da die Kontaktelemente keine ungewollte Energie abgeben können.

Darüber hinaus ist es vorteilhaft, wenn das zumindest eine Betätigungselement mit der Steuereinheit verbunden ist. Dies ermöglicht eine direkte Kommunikation zwischen dem Betätigungselement und der Steuereinheit, was eine schnelle und zuverlässige Reaktion auf Benutzeraktionen gewährleistet. Diese Verbindung verbessert die Gesamtfunktionalität des Akkumulators und erleichtert die Bedienung.

Vorteilhafterweise umfasst der Akkumulator zumindest eine Anzeigeeinheit, mittels der ein Ladezustand der Energiespeichereinheit angezeigt werden kann. Dies bietet dem Benutzer eine visuelle Rückmeldung über den aktuellen Ladezustand, was die Planung und Nutzung des Akkumulators erleichtert. Dadurch kann der Benutzer den Akkumulator effizienter einsetzen und rechtzeitig aufladen, was die Betriebszeit maximiert.

Es ist vorteilhaft, wenn ein Betätigungselement eine Ladezustandstaste ist, mittels der bei Betätigung der Ladezustand durch die Anzeigeeinheit angezeigt werden kann. Dies ermöglicht dem Benutzer, den Ladezustand jederzeit auf einfache Weise zu überprüfen. Dadurch wird die effiziente Nutzung des Akkumulators unterstützt, da der Benutzer immer über den aktuellen Ladezustand informiert ist. Bei mehreren Betätigungselementen ist infolgedessen eines der Betätigungselemente die Ladezustandstaste.

Des Weiteren ist es vorteilhaft, wenn die Steuereinheit mit der Ladezustandstaste verbunden ist und dass bei Betätigung der Ladezustandstaste der Transport- und/oder Lagerzustand beendet werden kann. Mit Hilfe der Ladezustandstaste kann der Transport- und/oder Lagerzustand auch aktiviert werden. Dies kombiniert die Funktionen der Ladezustandsanzeige und der Zustandsaktivierung in einem einzigen Element, was die Bedienung vereinfacht und die Benutzerfreundlichkeit erhöht.

Darüber hinaus ist es vorteilhaft, wenn die Steuereinheit derart ausgebildet und/oder eingerichtet ist, dass diese ein Aktivierungssignal zum Aktivieren des Transport- und/oder Lagerzustands übermitteln kann. Das Aktivierungssignal kann über das zumindest eine Kontaktelement übermittelt werden. Dies gewährleistet, dass der Akkumulator automatisch in den gewünschten Zustand versetzt wird, was die Handhabung vereinfacht und die Sicherheit erhöht.

Vorteilhafterweise kann die Steuereinheit derart ausgebildet und/oder eingerichtet sein, dass diese als Aktivierungssignal ein Stromsignal und/oder ein Spannungssignal erhalten und/oder auswerten kann. Das Strom- und/oder Spannungssignal kann eine Abfolge und/oder eine Sequenz sein. Mit Hilfe des Strom- und/oder Spannungssignals kann ein unbeabsichtigtes Aktivieren des Transport- und/oder Lagerzustands vermieden werden.

Es ist vorteilhaft, wenn einer der Kontaktelemente ein Wassererkennungskontakt ist, mittels dem das Aktivierungssignal an die Steuereinheit übermittelt werden kann. Der Akkumulator umfasst den Wassererkennungskontakt für einen zusätzlichen Schutz, indem der Akkumulator bei Kontakt mit Wasser automatisch in einen sicheren Zustand versetzt wird. Über diesen Wassererkennungskontakt kann allerdings auch das Strom- und/oder Spannungssignal übermittelt werden. Dem Akkumulator kann das Szenario vorgespielt werden, dass er Wasserkontakt hat. Daraufhin schaltet er das zumindest eine Kontaktelement spannungslos.

Darüber hinaus ist es vorteilhaft, wenn der Akkumulator eine Schalteinheit umfasst, mittels der eine elektrische Verbindung zwischen der Energiespeichereinheit und zumindest einem Kontaktelement unterbrochen werden kann. Dies ermöglicht die physische Trennung der Stromkreise, was die Sicherheit und Zuverlässigkeit erhöht.

Vorteilhafterweise umfasst der Akkumulator eine, insbesondere kabellose, Schnittstelle, die mit der Steuereinheit verbunden ist. Dies ermöglicht die drahtlose Kommunikation mit externen Geräten, was die Flexibilität und Anwendungsvielfalt erhöht. Das externe Gerät kann beispielsweise ein Smartphone sein. Die kabellose Schnittstelle erleichtert zudem die Installation und/oder Nutzung des Akkumulators in verschiedenen Umgebungen.

Darüber hinaus ist es vorteilhaft, wenn mittels der Schnittstelle ein externes Gerät mit der Steuereinheit verbunden werden kann. Dies erlaubt die Integration in bestehende Systeme und erweitert die Funktionalität des Akkumulators. Externe Geräte können so einfach Daten austauschen und den Akkumulator steuern, was die Vielseitigkeit des Systems erhöht.

Ferner ist es von Vorteil, wenn alle Kontaktelemente für und/oder während des Transport- und/oder Lagerzustands spannungslos geschalten werden können. Hierdurch wird die Sicherheit erhöht und/oder die Selbstentladung verringert.

Vorgeschlagen wird ferner ein Verfahren zum Betreiben und/oder zum Versetzen eines Akkumulators in einen Transport- und/oder Lagerzustand, wobei der Akkumulator vorzugsweise zumindest ein Merkmal der vorangegangenen und/oder nachfolgenden Beschreibung aufweist, wobei die genannten Merkmale einzeln oder in beliebiger Kombination vorhanden sein können. Der Akkumulator wird mittels einer Steuereinheit gesteuert.

Außerdem wird zumindest ein Kontaktelement des Akkumulators von der Steuereinheit für und/oder während den Transport- und/oder Lagerzustand spannungslos geschalten. Dies erhöht die Sicherheit und verhindert unerwünschte Energieabgaben während des Transports oder der Lagerung. Des Weiteren kann damit verhindert werden, dass es beim Transport und/oder bei der Lagerung zu einem Kurzschluss kommt.

Darüber hinaus ist es vorteilhaft, wenn zum Aktivieren des Transport- und/oder Lagerzustands ein Aktivierungssignal an die Steuereinheit übermittelt wird. Dies stellt sicher, dass der Akkumulator zuverlässig in den gewünschten Zustand versetzt wird, was die Bedienung erleichtert. Ein klar definiertes Aktivierungssignal erhöht zudem die Sicherheit und Effizienz des Systems.

Es ist vorteilhaft, wenn das Aktivierungssignal über zumindest ein Kontaktelement an die Steuereinheit übermittelt wird. Dies gewährleistet eine direkte und zuverlässige Übertragung des Aktivierungssignals. Die Nutzung der Kontaktelemente zur Signalübertragung erhöht die Robustheit und Zuverlässigkeit des Akkumulators. Das Aktivierungssignal kann beispielsweise über einen Wassererkennungskontakt als Kontaktelement übermittelt werden.

Darüber hinaus ist es vorteilhaft, wenn das Aktivierungssignal über eine Schnittstelle des Akkumulators an die Steuereinheit übermittelt wird. Dies ermöglicht eine flexible Integration in verschiedene Systeme und erhöht die Anwendungsvielfalt. Die Schnittstelle kann verschiedene Signalarten verarbeiten, was die Anpassungsfähigkeit des Akkumulators verbessert.

Es ist vorteilhaft, wenn eine Verbindung zwischen der Energiespeichereinheit und dem zumindest einen Kontaktelement, das spannungslos geschalten werden soll, von einer Schalteinheit unterbrochen wird. Dies bietet eine physische Trennung der Stromkreise, was die Sicherheit erhöht. Durch die Unterbrechung der Verbindung wird verhindert, dass Energie ungewollt abgegeben wird, was die Lebensdauer des Akkumulators verlängert.

Darüber hinaus ist es vorteilhaft, wenn der Transport- und/oder Lagerzustand durch Betätigen von zumindest einem Betätigungselement des Akkumulators aktiviert oder beendet wird, sodass das zumindest eine vorher spannungslose Kontaktelement spannungslos oder unter Spannung geschalten wird. Dies ermöglicht eine einfache und benutzerfreundliche Steuerung des Akkumulators. Der Benutzer kann den Zustand des Akkumulators jederzeit ändern, was die Flexibilität und Sicherheit erhöht.

Vorteilhafterweise überwacht die Steuereinheit während des Transport- und/oder Lagerzustands des Akkumulators das zumindest eine Betätigungselement, um das Betätigen des Betätigungselements zum Beenden des Transport- und/oder Lagerzustands zu erkennen. Dies erhöht die Sicherheit, indem sichergestellt wird, dass der Akkumulator nur dann aktiviert wird, wenn dies beabsichtigt ist. Dadurch wird das Risiko von Fehlbedienungen minimiert.

Es ist vorteilhaft, wenn zum Beenden des Transport- und/oder Lagerzustands die Schalteinheit die Verbindung zwischen der Energiespeichereinheit und dem zumindest einen vorher spannungslosen Kontaktelement hergestellt wird. Dies gewährleistet eine sichere und zuverlässige Rückkehr in den Betriebszustand. Die schnelle Wiederherstellung der Verbindung ermöglicht eine sofortige Nutzung des Akkumulators, was die Effizienz erhöht.

Ferner ist es von Vorteil, wenn alle Kontaktelemente für und/oder während des Transport- und/oder Lagerzustands spannungslos geschalten werden. Hierdurch wird die Sicherheit erhöht und/oder die Selbstentladung verringert.

Weitere Vorteile der Erfindung sind in den nachfolgenden Ausführungsbeispielen beschrieben. Es zeigen:
- **Figur 1**: eine perspektivische Ansicht des Akkumulators,
- **Figur 2**: eine Schnittansicht des Akkumulators und
- **Figur 3**: ein Blockschaltbild des Akkumulators.

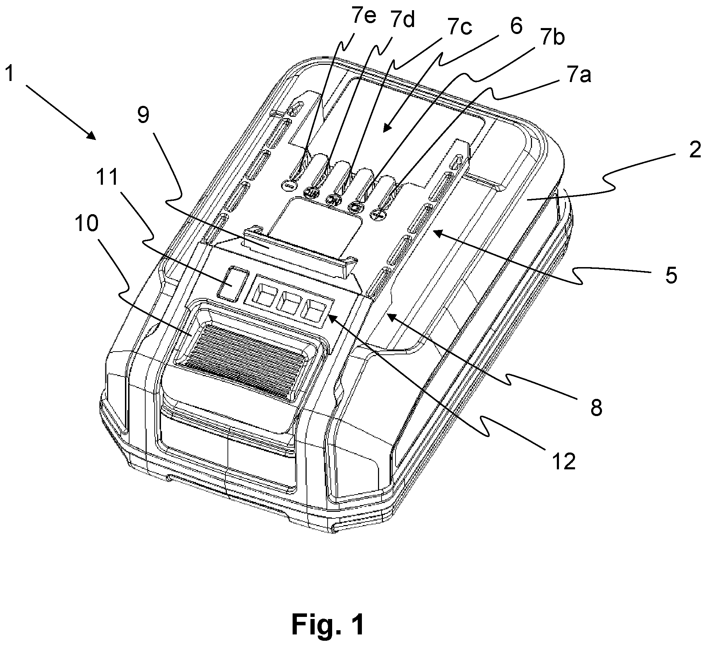

Figur 1 zeigt eine perspektivische Ansicht eines Akkumulators 1 für ein Arbeitsgerät. Der Akkumulator 1 kann somit ein Arbeitsgeräteakkumulator sein. Der Akkumulator 1 kann in verschiedenen Arbeitsgeräten wie beispielsweise Elektrowerkzeugen, Gartengeräten und Haushaltsgeräten verwendet werden.

Der Akkumulator 1 umfasst ein Gehäuse 2, das einen Innenraum 3 des Ackumulators 1 umschließt. Das Gehäuse 2 bietet eine robuste Schutzfunktion, die das Gehäuse 2 dem Innenraum 3 bietet, wodurch die darin enthaltenen Komponenten vor äußeren Einflüssen wie Stößen und Feuchtigkeit geschützt werden. Dies trägt zu einer erhöhten Langlebigkeit und Zuverlässigkeit des Akkumulators 1 bei.

Im Innenraum 3 ist mindestens eine Energiespeichereinheit 4 angeordnet, die der Speicherung und Bereitstellung elektrischer Energie dient. Die Anordnung der Energiespeichereinheit 4 im Innenraum 3 gewährleistet eine optimale Ausnutzung des verfügbaren Platzes und ermöglicht eine hohe Energiedichte. Der Vorteil dieser Anordnung besteht darin, dass sie eine effiziente und kompakte Energiebereitstellung ermöglicht, was besonders in tragbaren Anwendungen von großer Bedeutung ist.

Wie aus dem Ausführungsbeispiel der Figur 1 hervorgeht, weist das Gehäuse 2 einen Koppelbereich 5 auf, der der Verbindung des Akkumulators 1 mit einem Arbeitsgerät dient. Der Vorteil des Koppelbereichs 5 liegt in der einfachen und schnellen Verbindungsmöglichkeit, die eine problemlose Integration des Akkumulators 1 in verschiedene Systeme ermöglicht. Dies führt zu einer erhöhten Flexibilität und Vielseitigkeit in der Anwendung des Akkumulators 1.

Im Kontaktbereich 6 des Gehäuses 2 sind in diesem Ausführungsbeispiel mehrere Kontaktelemente 7a - 7e angeordnet, die die elektrische Verbindung zu dem Arbeitsgerät ermöglichen. Die Anordnung mehrerer Kontaktelemente 7a - 7e im Kontaktbereich 6 sorgt für eine zuverlässige und stabile elektrische Verbindung, was zu einer verbesserten Stromübertragung und geringeren Übergangswiderständen führt. Dadurch wird eine effiziente Energieübertragung sichergestellt und die Betriebssicherheit erhöht.

Das Ausführungsbeispiel der Figur 1 umfasst ferner einen Fixiermechanismus 8, der ein Fixierelement 9 aufweist, mit dem der Akkumulator 1 sicher an dem Arbeitsgerät befestigt werden kann. Der Vorteil des Fixiermechanismus 8 liegt in der sicheren und stabilen Befestigung des Akkumulators 1, wodurch ein unbeabsichtigtes Lösen während des Betriebs verhindert wird. Zur einfachen Handhabung ist ein Entriegelungselement 10 vorgesehen, das das Lösen des Akkumulators 1 von dem Arbeitsgerät ermöglicht. Dies trägt zu einer verbesserten Benutzerfreundlichkeit bei.

In der Figur 1 ist zudem eine Ladezustandstaste 11 dargestellt, die der Aktivierung der Anzeigeeinheit 12 dient. Die Ladezustandstaste 11 ermöglicht es, die Anzeigeeinheit 12 zu aktivieren, so dass der aktuelle Ladezustand des Akkumulators 1 angezeigt wird. Hierdurch kann der Benutzer den Ladezustand des Akkumulators 1 jederzeit leicht und schnell überprüfen, was eine optimale Nutzung und rechtzeitige Wiederaufladung ermöglicht.

Merkmale, welche bereits in der zumindest einen vorgegangenen Figur beschrieben sind, können der Einfachheit halber nicht nochmals erklärt werden. Ferner können Merkmale auch erst in dieser oder in zumindest einer der nachfolgenden Figuren beschrieben werden. Des Weiteren werden der Einfachheit halber für gleiche Merkmale gleiche Bezugszeichen verwendet. Außerdem können der Übersichtlichkeit halber nicht mehr alle Merkmale in den folgenden Figuren gezeigt und/oder mit einem Bezugszeichen versehen sein. Es können jedoch in einer oder mehreren der vorangegangenen Figuren gezeigte Merkmale auch in dieser oder in einer oder mehreren der nachfolgenden Figuren vorhanden sein. Ferner können der Übersichtlichkeit halber Merkmale auch erst in dieser oder in einer oder mehreren der nachfolgenden Figuren gezeigt und/oder mit einem Bezugszeichen versehen sein. Nichtsdestotrotz können Merkmale, welche erst in einer oder mehreren der nachfolgenden Figuren gezeigt sind, auch bereits in dieser oder einer vorangegangenen Figur vorhanden sein.

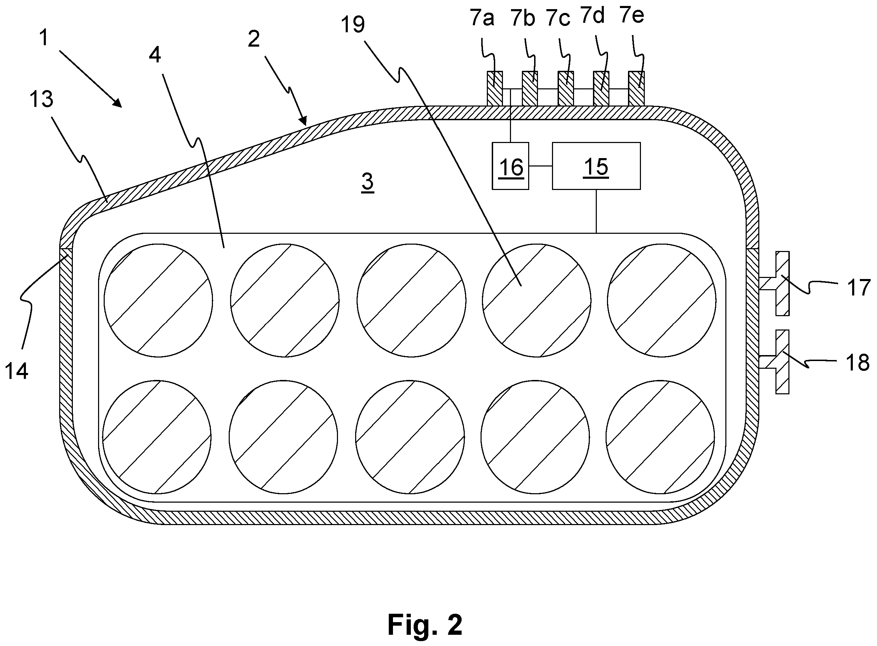

Figur 2 zeigt einen Querschnitt des Akkumulators 1, insbesondere eines Arbeitsgeräteakkumulators, für Arbeitsgeräte. Der Akkumulator 1 umfasst ein Gehäuse 2, das den Innenraum 3 umschließt.

Im Innenraum 3 ist mindestens die Energiespeichereinheit 4 angeordnet, die der Speicherung und Bereitstellung elektrischer Energie dient. Der hier gezeigte Gehäuse 2, welches den Innenraum 3 umgibt, umfasst hier zwei Gehäusehälften 13, 14, nämlich eine erste und eine zweite Gehäusehälfte 13, 14. Dadurch kann das Gehäuse 2 geöffnet werden, wenn der Akkumulator 1 beispielsweise gewartet oder repariert werden muss. Die beiden Gehäusehälften 13, 14 können vorteilhafterweise wasserdicht miteinander, jedoch vorteilhafterweise lösbar, verbunden sein.

Wie aus dem Ausführungsbeispiel der Figur 2 hervorgeht, umfasst der Akkumulator 1 mindestens zwei Kontaktelemente 7a - 7e, die im Kontaktbereich 6 des Gehäuses 2 angeordnet sind. Die Kontaktelemente 7a - 7e sind hier entlang einer Längsrichtung des Akkumulators 1 ausgerichtet. Die bevorzugte Anordnung der Kontaktelemente 7a - 7e ist die, die in der Figur 1 gezeigt ist. Zusätzlich weist das Ausführungsbeispiel der Figur 2 eine Steuereinheit 15 auf. Die Steuereinheit ist im vorliegenden Ausführungsbeispiel im Innenraum 3 des Akkumulators 1 angeordnet. Die Steuereinheit 15 dient zum Steuern des Akkumulators 1 und ist derart ausgebildet und/oder eingerichtet, dass sie zumindest ein Kontaktelement 7a - 7e für einen und/oder während eines Transport- und/oder Lagerzustands des Akkumulators 1 spannungslos schalten kann. Der Vorteil dieser Funktion besteht darin, dass sie die Sicherheit während des Transports und/oder der Lagerung erhöht, indem sie das Risiko von unbeabsichtigten elektrischen Verbindungen und möglichen Kurzschlüssen minimiert. Zusätzlich oder alternativ kann dadurch eine Selbstentladung des Akkumulators 1 bzw. der Energiespeichereinheit 4 vermindert werden.

Der Akkumulator 1 umfasst außerdem zumindest ein Betätigungselement 11, 17, 18. Die in der Figur 1 gezeigte Ladezustandstaste 11 ist ebenfalls ein Betätigungselement 11, 17, 18. Der Transport- und/oder Lagerzustand kann beispielsweise durch Betätigung eines Betätigungselements 11, 17, 18 aktiviert werden, welches mit der Steuereinheit 15 verbunden ist. Beim Aktivieren des Transport- und/oder Lagerzustands schaltet die Steuereinheit 15 zumindest ein Kontaktelement 7a - 7e spannungslos. Dies erhöht die Sicherheit und verhindert ungewollte Entladungen während des Transports und/oder der Lagerung. Dies führt zu einer verbesserten Handhabung. Der Transport- und/oder Lagerzustand kann beispielsweise durch eine Schaltabfolge und/oder -kombination am zumindest einen Betätigungselement 11, 17, 18 aktiviert werden.

Der Transport- und/oder Lagerzustand kann durch Betätigung des zumindest einen Betätigungselements 11, 17, 18 beendet werden. Durch die Betätigung des zumindest einen Betätigungselements 11, 17, 18 wird die Steuereinheit 15 angewiesen, das zumindest eine vorher spannungslose Kontaktelement 7a - 7e wieder zu aktivieren, wodurch es unter Spannung geschalten wird. Der Vorteil besteht darin, dass der Akkumulator 1 schnell und einfach aus dem sicheren Transport- und/oder Lagerzustand in den Betriebszustand überführt werden kann, was die Bedienerfreundlichkeit erhöht. Zudem kann die Steuereinheit 15 während des Transport- und/oder Lagerzustands das zumindest eine Betätigungselement 11, 17, 18 überwachen, um das Betätigen des Betätigungselements 11, 17, 18 zum Beenden des Transport- und/oder Lagerzustands zu erkennen. Dies erhöht die Sicherheit, indem sichergestellt wird, dass der Akkumulator 1 nur dann aktiviert wird, wenn dies beabsichtigt ist. Vorteilhafterweise kann zum Beenden des Transport- und/oder Lagerzustands die Ladezustandstaste 11 betätigt werden. Darüber können somit das vorher spannungslose Kontaktelement 7a - 7e unter Spannung geschalten werden.

Es ist vorteilhaft, wenn mittels des zumindest einen Betätigungselements 11, 17, 18 der Transport- und/oder Lagerzustand aktiviert werden kann, so dass das zumindest eine Kontaktelement 7a - 7e spannungslos geschaltet wird. Dies bietet eine einfache Möglichkeit, den Akkumulator 1 in einen sicheren Zustand zu versetzen. Dadurch wird die Sicherheit während des Transports und der Lagerung erhöht, da die Kontaktelemente 7 keine ungewollte Energie abgeben können.

Des Weiteren ist es vorteilhaft, wenn die Steuereinheit 15 mit der Ladezustandstaste 11 verbunden ist und dass bei Betätigung der Ladezustandstaste 11 der Transport- und/oder Lagerzustand beendet oder aktiviert werden kann. Dies kombiniert die Funktionen der Ladezustandsanzeige und der Zustandsaktivierung in einem einzigen Element, was die Bedienung vereinfacht und die Benutzerfreundlichkeit erhöht.

Darüber hinaus ist es vorteilhaft, wenn die Steuereinheit 15 derart ausgebildet und/oder eingerichtet ist, dass diese, insbesondere über zumindest ein Kontaktelement 7a - 7e, ein Aktivierungssignal zum Aktivieren des Transport- und/oder Lagerzustands übermitteln kann. Dies gewährleistet, dass der Akkumulator 1 in den gewünschten Zustand versetzt werden kann. Das Aktivierungssignal kann beispielsweise mit einem elektrischen Gerät erfolgen, dass als Aktivierungssignal ein Strom- und/oder Spannungssignal auf das zumindest eine Kontaktelement 7a - 7e gibt. Zusätzlich oder alternativ kann auch ein Kontaktelement 7a - 7e mit einem anderen Kontaktelement 7a - 7e überbrückt werden, um das Strom- und/oder Spannungssignal auszubilden. Die Steuereinheit 15 kann das Strom- und/oder Spannungssignal erkennen und den Transport- und/oder Lagerzustand aktivieren.

Vorteilhafterweise kann die Steuereinheit 15 derart ausgebildet und/oder eingerichtet sein, dass diese als Aktivierungssignal ein Stromsignal und/oder ein Spannungssignal erhalten und/oder auswerten kann. Dies erhöht die Flexibilität und ermöglicht die Integration in verschiedene Systeme und Anwendungen. Durch die Fähigkeit, unterschiedliche Signale zu verarbeiten, wird die Anpassungsfähigkeit des Akkumulators 1 verbessert.

Es ist vorteilhaft, wenn eines der Kontaktelemente 7a - 7e ein Wassererkennungskontakt ist, mittels dem das Aktivierungssignal an die Steuereinheit 15 übermittelt werden kann. Der Wassererkennungskontakt kann Wasser erkennen, indem er einen Stromfluss zum Wassererkennungskontakt von einem unter Spannung stehenden Kontaktelement 7a - 7e ermitteln kann. Die Kontaktelemente 7a - 7e können daraufhin spannungslos geschalten werden. Mittels des Wassererkennungskontakts kann aber auch der Lager- und/oder Transportzustand aktiviert werden, wenn dieser mit einem Strom- und/oder Spannungssignal beaufschlagt wird. Zwar denkt die Steuereinheit 15 dann, dass Wasser zu den Kontaktelementen 7a - 7e gelangt ist. Allerdings werden dadurch ebenfalls die Kontaktelemente 7a - 7e spannungslos geschalten, was dem Lager- und/oder Transportzustand entspricht. Beispielsweise kann das Strom- und/oder Spannungssignal mittels eines externen elektrischen Geräts auf den Wassererkennungskontakt geführt werden. Zusätzlich oder alternativ kann aber auch der Wassererkennungskontakt mit einem anderen unter Spannung stehenden Kontaktelement 7a - 7e überbrückt werden.

Wie hier weiterhin gezeigt ist, umfasst die Energiespeichereinheit 4 mehrere Einzelzellen 19. In Abhängigkeit der Anzahl der Einzelzellen 19 kann eine Kapazität und/oder Ausgangsspannung des Akkumulators 1 festgelegt werden.

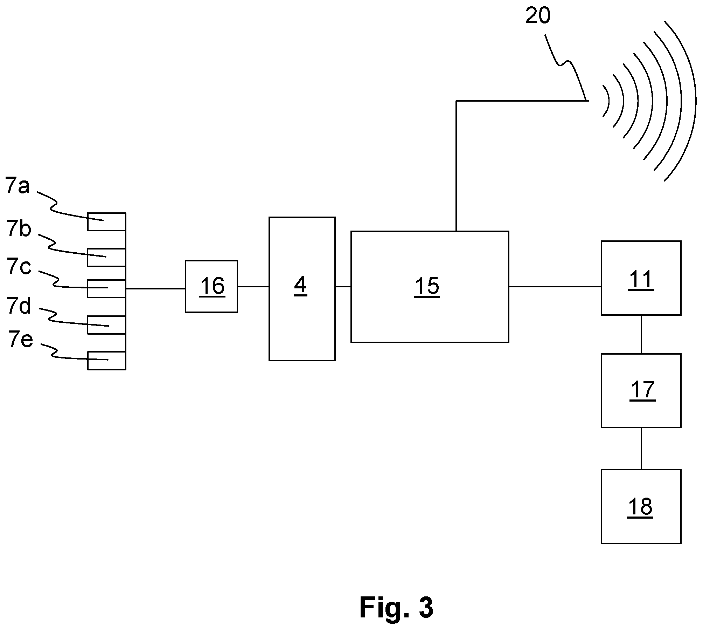

Figur 3 zeigt ein Blockschaltbild von Komponenten und/oder einer Elektronik des Akkumulators 1. Der Akkumulator 1 umfasst die Steuereinheit 15, die mit mehreren Komponenten verbunden ist, um die Funktion und Sicherheit des Akkumulators 1 zu gewährleisten.

Die Steuereinheit 15 ist mit der Energiespeichereinheit 4 verbunden. Diese Energiespeichereinheit 4 ist dazu vorgesehen, elektrische Energie zu speichern und bereitzustellen. Der Vorteil der Verbindung zwischen der Steuereinheit 15 und der Energiespeichereinheit 4 liegt in der effizienten Steuerung der Energieflüsse und der Überwachung des Ladezustands.

Wie aus dem Ausführungsbeispiel der Figur 3 hervorgeht, ist die Steuereinheit 15 auch mit einer Schalteinheit 16 verbunden. Die Schalteinheit 16 ist mit einem Schalter vergleichbar, der eine elektrische Verbindung zwischen den Kontaktelementen 7a - 7e und der Energiespeichereinheit 4 unterbrechen oder herstellen kann. Der Vorteil dieser Anordnung besteht darin, dass die Schalteinheit 16 eine einfache Steuerung der Betriebszustände des Ackumulators 1 ermöglicht und die Sicherheit während des Transports und/oder der Lagerung erhöht, indem zumindest ein Kontaktelement 7a - 7e spannungslos geschaltet werden können. Alternativ können auch alle Kontaktelemente 7a - 7e spannungslos geschaltet werden.

In diesem Ausführungsbeispiel ist die Energiespeichereinheit 4 zwischen der Steuereinheit 15 und der Schalteinheit 16 angeordnet. Die Steuereinheit 15 kann hier ebenfalls die Schalteinheit 16 steuern. Die Schalteinheit 16 kann, wie hier gezeigt ist, eine elektrische Verbindung zwischen der Energiespeichereinheit 4 und dem zumindest einem Kontaktelement 7a - 7e unterbrechen, um es spannungslos zu schalten. Die Schalteinheit 16 kann die elektrische Verbindung auch wieder herstellen, um das zumindest eine vorher spannungslose Kontaktelement 7a - 7e unter Spannung zu schalten. Die Schalteinheit 16 kann auch mehrere oder alle Kontaktelemente 7a - 7e beschalten, also entweder spannungslos oder unter Spannung schalten.

Zusätzlich ist die Steuereinheit 15 des vorliegenden Ausführungsbeispiels mit der Ladezustandstaste 11 und/oder dem ersten und/oder zweiten Betätigungselement 17, 18 verbunden. Die Ladezustandstaste 11 ermöglicht es, den Ladezustand des Akkumulators 1 anzuzeigen und den Transport- und/oder Lagerzustand zu aktivieren oder zu beenden. Der Vorteil dieser Kombination liegt in der vereinfachten Bedienung, da die Ladezustandsanzeige und die Zustandsaktivierung in einem einzigen Element integriert sind. Zusätzlich oder alternativ kann der Transport- und/oder Lagerzustand auch mit Hilfe des ersten und/oder zweiten Betätigungselements 11, 17, 18 aktiviert oder beendet werden. Die Ladezustandstaste 11 ist hierbei ebenfalls ein Betätigungselement 11, 17, 18.

Des Weiteren ist die Steuereinheit 15 mit der Ladezustandstaste 11, dem ersten Betätigungselement 17 und/oder dem zweiten Betätigungselement 18 verbunden.

Der Transport- und/oder Lagerzustand kann auch mittels einer Tastenkombination und/oder Tastenabfolge des zumindest einen Betätigungselements 17, 18 und/oder der Ladezustandstaste 11 aktiviert und/oder beendet werden. Dies erhöht die Sicherheit während des Transports, der Lagerung und/oder während der Benutzung, da es unwahrscheinlich ist, dass der Ackumulator 1 dadurch zufällig in den Transport- und/oder Lagerzustand versetzt wird, wenn zufällig und/oder unabsichtlich Tasten gedrückt werden. Dies ermöglicht eine benutzerfreundliche Handhabung und reduziert das Risiko von Bedienfehlern.

Ein weiteres vorteilhaftes Merkmal ist die Möglichkeit, dass die Steuereinheit 15 derart ausgebildet und/oder eingerichtet ist, dass diese, insbesondere über zumindest ein Kontaktelement 7a - 7e, ein Aktivierungssignal zum Aktivieren des Transport- und/oder Lagerzustands übermitteln kann. Dies gewährleistet, dass der Akkumulator 1 automatisch in den gewünschten Zustand versetzt wird, was die Handhabung vereinfacht und die Sicherheit erhöht. Zudem kann die Steuereinheit 15 flexibel auf verschiedene Signale reagieren, was die Anwendungsvielfalt erhöht. Das Aktivierungssignal kann beispielsweise über ein Kontaktelement 7a - 7e übermittelt werden. Einer dieser Kontaktelemente 7a - 7e kann beispielsweise der Wassererkennungskontakt sein, über den das Aktivierungssignal übermittelt werden kann. Der Vorteil des Wassererkennungskontakts besteht darin, dass dieser zusätzlichen Schutz bietet, indem der Akkumulator 1 bei Kontakt mit Wasser automatisch in einen sicheren Zustand versetzt wird. Hierbei werden die Kontaktelemente 7a - 7e ebenfalls spannungslos geschaltet. Dadurch wird das Risiko von Kurzschlüssen und anderen Gefahren minimiert. Dieses Verfahren kann auch zum Aktivieren des Transport- und/oder Lagerzustands angewandt werden. Der Wassererkennungskontakt wird mit einem Spannungssignal und/oder einem Stromsignal beaufschlagt und die Kontaktelemente 7a - 7e werden spannungslos geschaltet, was dem Transport- und/oder Lagerzustand entspricht.

Vorteilhafterweise kann die Steuereinheit 15 derart ausgebildet und/oder eingerichtet sein, dass diese als Aktivierungssignal ein Stromsignal und/oder ein Spannungssignal erhalten und/oder auswerten kann. Dies erhöht die Flexibilität und ermöglicht die Integration in verschiedene Systeme und Anwendungen. Durch die Fähigkeit, unterschiedliche Signale zu verarbeiten, wird die Anpassungsfähigkeit des Akkumulators 1 verbessert.

Darüber hinaus umfasst das Ausführungsbeispiel der Figur 3 eine Schnittstelle 20. Die Schnittstelle 20 kann eine drahtlose Schnittstelle 20 bzw. eine Funkschnittstelle sein. Diese Schnittstelle 20 kann zur Übertragung von Daten und zur Fernsteuerung des Akkumulators 1 verwendet werden. Der Vorteil der drahtlosen Schnittstelle 20 liegt in der erhöhten Flexibilität und der Möglichkeit, den Akkumulator 1 in verschiedene vernetzte Systeme zu integrieren. An die Schnittstelle 20 kann beispielsweise ein externes Gerät, wie beispielsweise ein Smartphone angekoppelt werden. Mit Hilfe des externen Geräts kann der Transport- und/oder Lagerzustand aktiviert oder beendet werden.

### Bezugszeichenliste

- 1: Akkumulator
- 2: Gehäuse
- 3: Innenraum
- 4: Energiespeichereinheit
- 5: Koppelbereich
- 6: Kontaktbereich
- 7: Kontaktelement
- 8: Fixiermechanismus
- 9: Fixierelement
- 10: Entriegelungselement
- 11: Ladezustandstaste
- 12: Anzeigeeinheit
- 13: erste Gehäusehälfte
- 14: zweite Gehäusehälfte
- 15: Steuereinheit
- 16: Schalteinheit
- 17: erstes Betätigungselement
- 18: zweites Betätigungselement
- 19: Einzelzellen
- 20: Schnittstelle

## Patentansprüche

1. Akkumulator (1), insbesondere Arbeitsgeräteakkumulator, für Arbeitsgeräte
mit einem Gehäuse (2), das einen Innenraum (3) umgibt,
mit zumindest einer im Innenraum (3) angeordneten Energiespeichereinheit (4),
mit zumindest zwei Kontaktelementen (7) und
mit einer Steuereinheit (15) zum Steuern des Akkumulators (1),
**dadurch gekennzeichnet,**
**dass** die Steuereinheit (15) derart ausgebildet und/oder eingerichtet ist, dass diese zumindest ein Kontaktelement (7) für einen und/oder während eines Transport- und/oder Lagerzustands des Akkumulators (1) spannungslos schalten kann.

2. Akkumulator nach dem vorherigen Anspruch, **dadurch gekennzeichnet, dass** die Steuereinheit (15) derart ausgebildet und/oder eingerichtet ist, dass diese das zumindest eine vorher spannungslose Kontaktelement (7) unter Spannung schalten kann.

3. Akkumulator nach einem oder mehreren der vorherigen Ansprüche,
**dadurch gekennzeichnet, dass** der Akkumulator (1) zumindest ein Betätigungselement (11, 17, 18) umfasst, mittels dem der Transport-und/oder Lagerzustand aktiviert werden kann, so dass das zumindest eine vorher spannungslose Kontaktelement (7) unter Spannung geschaltet wird, und/oder dass mittels des zumindest einen Betätigungselements (11, 17, 18) der Transport- und/oder Lagerzustand aktiviert werden kann, so dass das zumindest eine Kontaktelement (7) spannungslos geschalten wird.

4. Akkumulator nach einem oder mehreren der vorherigen Ansprüche,
**dadurch gekennzeichnet, dass** die Steuereinheit (15) derart ausgebildet und/oder eingerichtet ist, dass diese während des Transport-und/oder Lagerzustands des Akkumulators das zumindest eine Betätigungselement (11, 17, 18) überwachen kann, um das Betätigen des Betätigungselements (11, 17, 18) zum Beenden des Transport-und/oder Lagerzustands zu erkennen, wobei das zumindest eine Betätigungselement (11, 17, 18) vorzugsweise mit der Steuereinheit (15) verbunden ist.

5. Akkumulator nach einem oder mehreren der vorherigen Ansprüche,
**dadurch gekennzeichnet, dass** der Akkumulator (1) zumindest eine Anzeigeeinheit (12) umfasst, mittels der ein Ladezustand der Energiespeichereinheit (4) angezeigt werden kann,
wobei vorzugsweise ein Betätigungselement (11, 17, 18) eine Ladezustandstaste (11) ist, mittels dem bei Betätigung der Ladezustand durch die Anzeigeeinheit (12) angezeigt werden kann und/oder
wobei die Steuereinheit (15) vorzugsweise mit der Ladezustandstaste (11) verbunden ist und dass bei Betätigung der Ladezustandstaste (11) der Transport- und/oder Lagerzustand beendet oder aktiviert werden kann.

6. Akkumulator nach einem oder mehreren der vorherigen Ansprüche,
**dadurch gekennzeichnet, dass** die Steuereinheit (15) derart ausgebildet und/oder eingerichtet ist, dass diese, insbesondere über zumindest ein Kontaktelement (7), ein Aktivierungssignal zum Aktivieren des Transport- und/oder Lagerzustands übermitteln kann.

7. Akkumulator nach einem oder mehreren der vorherigen Ansprüche,
**dadurch gekennzeichnet, dass** die Steuereinheit (15) derart ausgebildet und/oder eingerichtet ist, dass diese als Aktivierungssignal ein Stromsignal und/oder ein Spannungssignal erhalten und/oder auswerten kann.

8. Akkumulator nach einem oder mehreren der vorherigen Ansprüche,
**dadurch gekennzeichnet, dass** einer der Kontaktelemente (7) ein Wassererkennungskontakt ist, mittels dem das Aktivierungssignal an die Steuereinheit (15) übermittelt werden kann.

9. Akkumulator nach einem oder mehreren der vorherigen Ansprüche,
**dadurch gekennzeichnet, dass** der Akkumulator (1) eine Schalteinheit (16) umfasst, mittels dem eine elektrische Verbindung zwischen der Energiespeichereinheit (4) und zumindest einem Kontaktelement (7) unterbrochen werden kann.

10. Akkumulator nach einem oder mehreren der vorherigen Ansprüche,
**dadurch gekennzeichnet, dass** der Akkumulator (1) eine, insbesondere kabellose, Schnittstelle (20) umfasst, die mit der Steuereinheit (15) verbunden ist,
wobei vorzugsweise mittels der Schnittstelle (20) ein externes Gerät mit der Steuereinheit (15) verbunden werden kann.

11. Verfahren zum Betreiben und/oder zum Versetzen eines Akkumulators (1) in einen Transport- und/oder Lagerzustand, wobei der Akkumulator (1) vorzugsweise gemäß einem oder mehreren der vorherigen Ansprüche ausgebildet ist,
bei dem der Akkumulator (1) mittels einer Steuereinheit (15) gesteuert wird und
bei dem zumindest ein Kontaktelement (7) des Akkumulators (1) von der Steuereinheit (15) für und/oder während den Transport- und/oder Lagerzustand spannungslos geschalten wird.

12. Verfahren nach dem vorherigen Anspruch, **dadurch gekennzeichnet,**
**dass** zum Aktivieren des Transport- und/oder Lagerzustands ein Aktivierungssignal an die Steuereinheit (15) übermittelt wird,
wobei das Aktivierungssignal vorzugsweise über zumindest ein Kontaktelement (7) an die Steuereinheit (15) übermittelt wird und/oder wobei das Aktivierungssignal vorzugsweise über eine Schnittstelle (20) des Akkumulators (1) an die Steuereinheit (15) übermittelt wird.

13. Verfahren nach einem oder mehreren der vorherigen Ansprüche,
**dadurch gekennzeichnet, dass** eine Verbindung zwischen der Energiespeichereinheit (4) und dem zumindest einen Kontaktelement (7), das spannungslos geschalten werden soll, von einer Schalteinheit (16) unterbrochen wird, und/oder
dass zum Beenden des Transport- und/oder Lagerzustands die Schalteinheit (16) die Verbindung zwischen der Energiespeichereinheit (4) und dem zumindest einen vorher spannungslosen Kontaktelement (7) hergestellt wird.

14. Verfahren nach einem oder mehreren der vorherigen Ansprüche,
**dadurch gekennzeichnet, dass** der Transport- und/oder Lagerzustand durch Betätigen von zumindest einem Betätigungselement (11, 17, 18) des Akkumulators (1) aktiviert oder beendet wird, so dass das zumindest eine vorher spannungslose Kontaktelement (7) spannungslos oder unter Spannung geschalten wird.

15. Verfahren nach einem oder mehreren der vorherigen Ansprüche,
**dadurch gekennzeichnet, dass** die Steuereinheit (15) während des Transport- und/oder Lagerzustands des Akkumulators (1) das zumindest eine Betätigungselement (11, 17, 18) überwacht, um das Betätigen des Betätigungselements (11, 17, 18) zum Beenden des Transport- und/oder Lagerzustands zu erkennen.
